(19) Europäisches Patentamt
European Patent Office
Office européen des brevets

(11) Veröffentlichungsnummer: **0 123 647**
**B1**

(12) # EUROPÄISCHE PATENTSCHRIFT

(45) Veröffentlichungstag der Patentschrift: **14.01.87**

(21) Anmeldenummer: **84810126.7**

(22) Anmeldetag: **19.03.84**

(51) Int. Cl.⁴: **C 11 D 3/00**, B 01 D 13/04, C 09 B 47/04, C 09 B 67/00, D 06 L 3/12

(54) **Verfahren zur Verhinderung des Gelierens von konzentrierten wässrigen Photoaktivatorlösungen.**

(30) Priorität: **25.03.83 CH 1641/83**

(43) Veröffentlichungstag der Anmeldung: **31.10.84 Patentblatt 84/44**

(45) Bekanntmachung des Hinweises auf die Patenterteilung: **14.01.87 Patentblatt 87/3**

(84) Benannte Vertragsstaaten: **CH DE FR GB IT LI**

(56) Entgegenhaltungen:
**EP-A-0 041 240**
**EP-A-0 059 782**
**DE-A-2 812 278**
**FR-A-2 513 276**

(73) Patentinhaber: **CIBA- GEIGY AG, Klybeckstrasse 141, CH- 4002 Basel (CH)**

(72) Erfinder: **Preiswerk, Werner, Blütenweg 14, CH-4102 Binningen (CH)**
Erfinder: **Bruttel, Beat, Dr., Ob den Reben 5, CH-4461 Böckten (CH)**

EP 0 123 647 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein Verfahren zur Verhinderung des Gelierens von konzentrierten wässrigen Photoaktivatorlösungen, die sulfonierte Zink- oder/und Aluminiumphthalocyanine als Photoaktivatoren enthalten sowie die so erhaltenen, nicht gelierenden, konzentrierten, lagerstabilen wässrigen Lösungen.

Sulfonierte Zink- und Aluminiumphthalocyanine sind als ausgezeichnete Photoaktivatoren bekannt, die vornehmlich als Photobleichmittel, gegebenenfalls auch als antimikrobiell wirksame Mittel eingesetzt werden können. Siehe z.B. US-A- 3,927,967, 4,094,806, 4,033,718, 4,256,597, 4,256,598, 4,318,883, 4,166,718, 4,311,605; EP-A- 47 716. Diese sulfonierten Zink- und Aluminiumphthalocyanine werden z.B. als Photobleichmittel in verschiedenen Waschmitteln eingesetzt.

Bisher bereitete es grosse Schwierigkeiten, brauchbare Handelsformen der genannten Photoaktivatoren herzustellen. Die Phthalocyaninsulfonate fallen aus der Synthese relativ unrein an. Sie enthalten in der Regel bis zu 30 % organische und anorganische Nebenprodukte. Letztere sind hauptsächlich Salze wie NaCl und $Na_2SO_4$. An organischen Nebenprodukten liegt eine Vielzahl von teilweise nicht identifizierten Verbindungen vor, beispielsweise in einer Menge bis zu 15 %. Diese Nebenprodukte sind in hohem Masse unerwünscht, da sie beispielsweise die Wirkung des Photoaktivators beeinträchtigen könnten. Es wurde versucht, diese Nebenprodukte auf chemischem Wege abzutrennen. Die Resultate konnten jedoch nicht voll befriedigen. Die auf diese Weise erhaltenen wässrigen Lösungen enthielten noch immer eine zu grosse Menge an Nebenprodukten, enthielten den Photoaktivator nicht in der wünschbaren hohen Konzentration und waren auch nicht hinreichend lagerstabil. Ein weiterer Nachteil dieser flüssigen Formulierungen bestand darin, dass sie häufig gelierten, d.h. dass ihre Viskosität zunahm. Dieser unerwünschte Effekt führte oft dazu, dass die Lösungen gelartig wurden und kaum mehr giessbar waren. Dieses problem trat besonders im Falle des sulfonierten Aluminiumphthalocyanins auf.

Aufgabe der vorliegenden Erfindung war es nun, einen Weg zu finden, eine flüssige wässrige Handelsform der genannten Photoaktivatoren herzustellen, die die oben angeführten Nachteile nicht aufweist. Insbesondere war es Aufgabe der vorliegenden Erfindung, ein Verfahren zu finden, durch das das Gelieren der flüssigen wässrigen Handelsform verhindert oder zumindest vermindert werden konnte. Ferner sollte letztere eine möglichst hohe Konzentration an Photoaktivator aufweisen, über lange Zeit lagerstabil sein und möglichst wenig organische Verunreinigungen und anorganische Salze enthalten.

Es wurde überraschenderweise gefunden, dass die vorstehend genannten Aufgaben dadurch gelöst werden können, dass man bei der Herstellung der Photoaktivatorlösungen eine Rohlösung der Photoaktivatoren über eine bestimmte halbdurchlässige, asymmetrische Membran führt.

Membrantrennverfahren sind z.B. aus den DE-A- 22 04 725, 28 05 891 und 29 48 292 bekannt. Die EP-A- 59 782 beschreibt ein Verfahren zur Herstellung von wässrigen Farbstoffpräparaten, insbesondere von Reaktivfarbstoffe enthaltenden Präparaten, mit Hilfe eines Membrantrennverfahrens wobei den Formulierungen gegebenenfalls Formulierungshilfsmittel zugesetzt werden.

In keiner der genannten Veröffentlichungen ist beschrieben oder nahegelegt, dass durch das erfindungsgemässe Verfahren nicht gelierende Photoaktivatorlösungen erhalten werden können, die überraschenderweise extrem wenig Nebenprodukte enthalten (verglichen mit den Farbstofflösungen des Standes der Technik) und die ebenfalls überraschenderweise wesentlich besser lagerstabil sind.

Das erfindungsgemässe Verfahren zur Verhinderung des Gelierensvon konzentriertenwässrigen Photoaktivatorlösungen enthaltend sulfonierte Zink- oder/und Aluminiumphthalocyanine besteht darin, dass man zur Herstellung von weniger als 1 Gew.-% NaCl und $Na_2SO_4$ enthalten konzentrierten Lösungen eine die genannten Photoaktivatoren enthaltende Rohlösung über eine halbdurchlässige, asymmetrische, einen Porendurchmesser von 0,1 bis 50 nm aufweisende Membran führt, die aus einem Celluloseacetat-Grundgerüst, das durch Umsetzung mit einer reaktive Gruppierungen aufweisenden ionischen Verbindung modifiziert ist, besteht, oder die aus einem Grundgerüst besteht, das Polyacrylnitril oder Copolymerisat aus Acrylnitril und anderen äthylenisch ungesättigten Monomeren enthält, welches durch Umsetzung mit Hydroxylamin und anschliessender Umsetzung mit einer polyfunktionellen monomeren Verbindung, einem polyfunktionellen Polymer und einer reaktive Gruppierungen aufweisenden ionischen Verbindung modifiziert ist.

Die im erfindungsgemässen Verfahren verwendbaren, halbdurchlässigen Membranen sollen höhermolekulare Stoffe zurückhalten, während sie einen hohen Durchfluss von Wasser und gelösten Stoffen mit einem niedrigen Molekulargewicht, z.B. Salzen, wie Natriumchlorid, Natriumsulfat, Kaliumchlorid, Ammoniumsulfat, Natriumphosphat, Kaliumsulfat, Natriumacetat oder niedrigmolekularen Verunreinigungen, z.B. nicht umgesetzte oder teilweise zersetzte Ausgangsprodukte, gewährleisten. Sie sollen aber auch verschieden geladene Ionen trennen können.

Der Rückhalt bzw. die Abtrennung ("cut off level") wird durch das Molekulargewicht bzw. die ionische Beladung bestimmt. Diese sogenannte Membran-Hyperfiltration wird auch Umkehr-Osmose (Reverse Osmosis) genannt und ist mit der Ultrafiltration verwandt. Unter diesem Begriff werden Abtrennungsvorgänge im molekularen Bereich verstanden.

Die erfindungsgemäss verwendbaren Membranen sind halbdurchlassige, ionische, asymmetrische Membranen, deren Poren einen Durchmesser von 0,1 bis 50 nm aufweisen. Sie haben einen "cut off level" von beispielsweise 300 bis 500. Für das Verfahren gemäss vorliegender Erfindung sind Membranen mit einem "cut off level" von 400 bis 500 besonders geeignet. Sie lassen Wasser und gelöste Stoffe, die auf Grund ihrer

Molekulargrössen unterhalb des Abtrenn-Niveaus ("cut off level") liegen, bei hohen Geschwindigkeiten pro Flächeneinheit und bei geringem bis mittlerem Druck durchtreten. Erfindungsgemäss werden Drucke von z.B. 10 bis 100 bar, vorzugsweise von 10 bis 30 bar und insbesondere von 20 bis 30 bar verwendet. Der Druck kann z.B. mittels einer Pumpe ausgeübt werden.

In einem Filtrationsgang kann der Entsalzungseffekt ohne Photoaktivatorverlust bis zu 70 und mehr Prozent betragen. Dabei nimmt das Volumen der Lösung der zurückgehaltenen Substanzen (konzentratseitig) entsprechend ab und die Konzentration des zurückgehaltenen Teils zu.

Wird eine weitere Verminderung der niedermolekularen Komponente gewünscht, so kann dies ohne Schwierigkeiten nach Verdünnung der zurückgehaltenen Lösung oder Suspension mit Wasser zweckmässig auf das Ausgangsvolumen durch ein- oder mehrmalige Wiederholung des Verfahrens erreicht werden. Die Trennung kann auch kontinuierlich durchgeführt werden, indem die Zufuhrgeschwindigkeit des Wassers derjenigen der Permeatabnahme angepasst wird.

Die erfindungsgemäss einsetzbaren Membranen weisen ein Celluloseacetat- oder Polyacrylnitril- oder ein Acrylnitril andere äthylenisch ungesättigte Monomere-Copolymerisat-Grundgerüst auf, das in der oben beschriebenen Weise modifiziert ist. Technisch bewährt haben sich vor allem Membranen auf Basis von Celluloseacetat.

Als reaktive Reagenzien, die eine ionisierbare Gruppe enthalten, kommen farblose und farbige Verbindungen in Betracht, z.B. ionogene Reaktivfarbstoffe, die verschiedenen Klassen angehören können, wie Anthrachinon-, Azo- oder Formazanfarbstoffe. Als farblose Verbindungen kommen etwa Derivate der 4,4'-Diaminostilben-2,2'-disulfonsäure, z.B. 4,4'-Bis-(4",6"-dichlortriazin-2"-yl)aminostilben-2,2'-disulfonsäure und ähnliche Verbindungen in Betracht. Als Reaktivgruppen, welche die Bindung dieser Reagenzien an die Ausgangspolymeren ermöglichen, seien die folgenden genannt: Carbonsäurehalogenidgruppen, Sulfonsäurehalogenidgruppen, Reste von α,ß-ungesättigten Carbonsäuren oder Amiden, z.B. der Acryl-, Methacryl-, α-Chloracryl- oder α-Bromacrylsäure, Acrylamidreste, Reste vorzugsweise niedriger Halogenalkylcarbonsäuren, z.B. der Chloressigsäure, α,ß-Dichlorpropionsäure oder α,ß-Dibrompropionsäure; Reste von Fluorcyclobutancarbonsäuren, z.B. der Trioder Tetrafluorcyclobutancarbonsäure; Reste mit Vinylacylgruppen, z.B. Vinylsulfongruppen oder Carboxyvinylgruppen; Reste, die Aethylsulfonyl-($-SO_2CH_2CH_2OSO_2OH$, $-SO_2CH_2CH_2Cl$) oder Aethylaminosulfonylgruppen ($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, Halogenbenzthiazolen oder vorzugsweise halogenierten Pyrimidinen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Als ionisierbare Gruppen sind z.B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Thioisocyanatgruppen, von primären, sekundären oder tertiären Aminogruppen und Wasserstoff gebildete Ammoniumgruppen oder quaternäre Ammoniumgruppen, ferner Phosphonium- oder Sulfoniumgruppen geeignet. Bevorzugt sind reaktive Verbindungen (Reaktivfarbstoffe) mit Sulfonsäure-, Carbonsäure- oder Ammoniumgruppen.

Besonders günstige Ergebnisse werden in manchen Fällen mit sulfonsäuregruppenhaltigen Verbindungen erzielt. Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten.

Membranen aus (teilweise acetyliertem) Celluloseacetat können z.B. direkt durch Umsetzung mit den zuvor genannten reaktiven ionischen Verbindungen, insbesondere anionischen Reaktivfarbstoffen, modifiziert werden (siebe z.B. deutsche Offenlegungsschrift 25 05 254).

Eine weitere Modifikation von Celluloseacetat kann z.B. durch chemische Umsetzung (in der angegebenen Reihenfolge) mit 1) einer polyfunktionellen monomeren Verbindung mit mindestens zwei funktionellen Gruppen (z.B. Cyanurchlorid); 2) einem polyfunktionellen Oligomer oder Polymer (z.B. Polyäthylenimin); und 3) einer ionischen Verbindung (z.B. ionischer Reaktivfarbstoff, Reaktivgruppierungen und ionische Gruppen wie angegeben) (siehe z.B. veröffentlichte europäische Patentanmeldung 26399).

Die polyfunktionelle monomere Verbindung weist vorzugsweise mindestens 2 funktionelle Gruppen auf. Geeignete Verbindungen sind cyclische Kohlensäureimidhalogenide, Isocyanate, Isothiocyanate oder N-Methylolverbindungen, wobei Halogendi- oder -triazine, wie z.B. Cyanurhalogenide (Cyanurchlorid) oder Tri- oder Tetrahalogenpyrimidine (Tetrachlorpyrimidin) besonders geeignet sind.

Die polyfunktioncllen Oligomeren oder Polymeren weisen vor allem aliphatische oder aromatische Amino-, Hydroxyl-, Thiol-, oder Isocyanat- und/oder Thioisocyanatgruppen auf. Geeignete polyfunktionelle polymere sind Polyäthylenimin, Polyvinylalkohol, Cellulosederivate, polyvinylamin oder Polyvinylanilin; Polyäthylenimin ist bevorzugt.

Die Membran enthält als ionische Gruppe vorzugsweise Sulfonsäure-, Carbonsäure- oder Ammoniumgruppen. Besonders vorteilhaft sind die Membranen, die Reste eines anionischen Reaktivfarbstoffes enthalten.

Membranen, die aus einem Grundgerüst bestehen, das Polyacrylnitril oder Copolymerisat aus Acrylnitril und anderen äthylenisch ungesättigten Monomeren enthält, sind z.B. in der veröffentlichten europäischen Patentanmeldung 25 973 beschrieben. Die Herstellung von im erfindungsgemässen Verfahren einsetzbaren modifizierten Membranen dieses Typs ist in der deutschen Offenlegungsschrift 30 35 134 beschrieben. Das

Membrangrundgerüst wird mit Hydroxylamin umgesetzt (Einführung von Amidoximgruppen in die Membran) und dann in gleicher Weise modifiziert, wie im Falle der Celluloseacetatmembranen in der veröffentlichten europäischen Patentanmeldung 26 399 beschrieben.

Der Anteil der Acrylnitrileinheiten im Grundgerüst der Membran beträgt vorteilhaft mindestens 5 und vorzugsweise mindestens 20 Gewichtsprozent. Bevorzugt sind Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymere auf Acrylnitrilbasis.

Die so modifizierten Membranen können gegebenenfalls noch einer Wärmebehandlung unterworfen werden ("Tempern"). Durch die Wärmebehandlung wird weitgehend die Porengrösse der Membranhaut bestimmt. Man behandelt die Membran während 1 bis 30 Minuten bei einer Temperatur von 60 bis 90°C, zweckmässig indem man sie in warmes Wasser taucht. Gegebenenfalls kann die Wärmebehandlung auch vor der Umsetzung mit der reaktiven, ionisierbare Gruppen enthaltenden Verbindung ausgeführt werden. Ferner lässt sich die Umsetzung auch ausführen, bevor das polymere Material zur asymmetrischen Membran verarbeitet wird.

Die Membranen können verschiedene Formen aufweisen, können z.B. plattenförmig, blattförmig, röhrenförmig, in Form einer Tasche, eines Konus oder von Hohlfasern vorliegen. Um sie wirkungsvoll zur Stofftrennung einsetzen zu können, müssen sie in entsprechende Systeme (Module) integriert und in Anlagen (für die Druckpermeation) eingebaut werden.

Innerhalb des weiter oben angegebenen Bereichs kann die Porengrösse durch abgestuftes Tempern variiert werden. Zweckmässig beträgt die durchschnittliche Ladungsdichte (gleich Gehalt an ionisierbaren Gruppen) der Membran 1 bis 100 Milliäquivalent je kg trockene Membran.

Die erfindungsgemäss hergestellten wässrigen Lösungen enthalten als Photoaktivatoren sulfonierte Zink- oder Aluminiumphtbalocyanine oder Mischungen derselben. Bevorzugt sind dabei sulfonierte Phthalocyanine der Formel

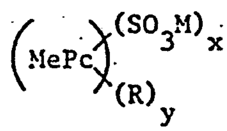 ,   (1)

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, oder deren Mischungen.

Besonders praktische Bedeutung hat die Herstellung von konzentrierten, nicht gelierenden. Flüssigformulierungen von Phthalocyanin-Photoaktivatoren der Formel

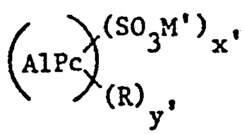 ,   (2)

worin AlPc das Aluminiumphthalocyaninringsystem, M' Wasserstoff, Natrium oder Kalium, x' eine beliebige Zahl von 2 bis 4, R Fluor, Chlor, Brom oder Jod und y' eine beliebige Zahl von 0 bis 1,5 bedeuten, sowie der Formel (S0 M,)

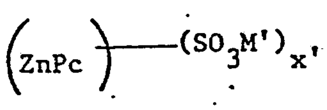 ,   (3)

worin ZnPc das Zinkphthalocyaninringsystem, M' Wasserstoff, Natrium oder Kalium und x' eine beliebige Zahl von 2 bis 4 bedeuten.

Aus der Synthese fallen die sulfonierten Al- und Zn-Phthalocyanine als rohe Syntheselösungen oder -dispersionen oder als Filter- oder Presskuchen an, die neben Wasser bis zu etwa 20 % organische Nebenprodukte (Ausgangsprodukte, Zersetzungsprodukte usw.) und ebenfalls bis zu 20 % inerte Salze (Elektrolyten) enthalten. Letztere rühren hauptsächlich von der Neutralisation und/oder dem Aussalzen des Phthalocyaninsulfonates aus der Syntheselösung her. Es sind dies z.B. Alkalimetall- und Erdalkalimetallsalze wie etwa Ammonium-, Magnesium-, Natrium- oder Kaliumchlorid , -sulfat oder -hydrogensulfat, vor allem Natriumsulfat und insbesondere Natriumchlorid. Zur Durchführung des erfindungsgemässen Verfahrens wird

das direkt aus der Synthese anfallende Reaktionsgemisch oder eine wässrige Anschlämmung des oben erwähnten feuchten Filter- oder Presskucbens oder der bereits getrockneten Ware in der weiter oben beschriebenen Weise durch die halbdurchlässige Membran geführt.

Die nach dem erfindungsgemässen Verfahren erhältlichen wässrigen Photoaktivatorlösungen (Flüssigformulierungen) sind ebenfalls Gegenstand der vorliegenden Erfindung. Sie weisen ausserordentlich geringe Anteile an organischen und anorganischen Verunreinigungen und eine hohe Konzentration an Photoaktivator auf. Sie sind ausgezeichnet lagerstabil und gelieren selbst bei langer Lagerung nicht.

Erfindungsgemässe nicht gelierende, konzentrierte, lagerstabile wässrige Photoaktivatorlösungen(-formulierungen) enthalten beispielsweise 5-50 Gew.-% eines oder mehrerer sulfonierter Aluminium- oder/ und Zink-Phthalocyanine, insbesondere der Formel (1), 0,05 bis 1 Gew.-% Neutralsalze, insbesondere NaCl und $Na_2SO_4$, und 0,05 bis 2 Gew.-% organische Nebenprodukte.

Bevorzugte erfindungsgemässe Photoaktivatorlösungen enthalten 10 bis 35 Gew.-% eines sulfonierten Phthalocyanins der Formel (1), insbesondere der Formel (2) oder (3), 0,01 bis 0,2 Gew.-% NaCl, 0,1 bis 0,8 $Na_2SO_4$ und 0,1 bis 1 % organische Nebenprodukte.

In den nachfolgenden Beispielen bedeuten, falls nichts anderes angegeben, Teile Gewichtsteile und Prozente Gewichtsprozente.

Beispiele für die Herstellung von bevorzugten, im erfindungsgemässen Verfahren einsetzbaren Membranen

A. Nach Beispiel 1 der deutschen Offenlegungsschrift 25 05 254:

Aus 25 g Celluloseacetat (Acetylierungsgrad = 39,8 %), 45 g Aceton und 30 g Formamid wird eine Lösung hergestellt. Man lässt sie drei Tage stehen, giesst sie auf eine Glasplatte und verstreicht sie mit einem Spatel zu einer Schicht von 0,6 mm Dicke, lässt während 5 Sekunden bei 25° C Lösungsmittel verdunsten, legt die Glasplatte für 2 Stunden in Eiswasser ein und zieht die entstandene Membran von der Glasplatte ab.

Die Membran wird dann in eine 5%ige wässrige Lösung der 1:2-Chromkom-plexverbindung des Farbstoffes der Formel

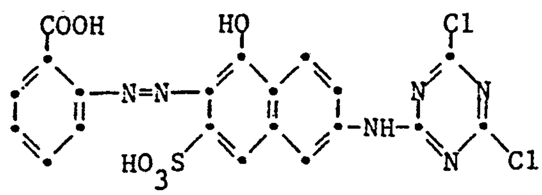

eingetaucht und verbleibt dort während 48 Stunden bei einem pH-Wert von 6 und einer Temperatur von 25° C. Hierauf wird der pH-Wert der Farbstofflösung durch Zusatz von Natriumhydroxid auf 10,4 gebracht und die Lösung während 40 Minuten bei 25° C ständig bewegt.

Anstatt die Membran so in zwei Stufen mit der Farbstofflösung zu behandeln, kann man sie auch einstufig während 2 L/2 Stunden beim pH-Wert 10,5 und bei 25°C mit einer 10%igen Lösung des Chromkomplexfarbstoffes behandeln. Zur anschliessenden Wärmebehandlung (Tempern) wird die Membran während 10 Minuten in Wasser von 60° C eingelegt.

Die Herstellung weiterer geeigneter Membranen ist in den übrigen Beispielen der DE-A- 25 05 254 beschrieben.

B. Nach Beispiel 1 der DE-A- 30 35 134:

Eine für die Ultrafiltration geeignete Membran mit einem maximalen Porendurchmesser von 11,5 nm aus einem Acrylnitril Vinylacetat 85:15-Copolymerisat, welches die nachfolgenden Rückhaltevermögen aufweist:

2%ige Natriumchloridlösung 6 %
1%ige Natriumsulfatlösung 10 %
Dextrin (Molekulargewicht 70'000) 60 %
1%ige Lösung des Farbstoffs der Formel (4) 34 %

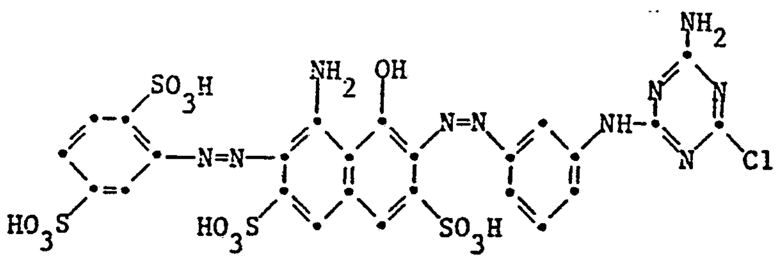

(4)

wird während 5 Minuten bei 65°C mit einer wässrigen Lösung, welche 10 % Hydroxylamin und 7,5 % Natriumcarbonat enthält und einen pH-Wert von 6,5 aufweist, behandelt. Anschliessend wird die Membran aus der Lösung entfernt und in eine gerührte Lösung von 370 mg Cyanurchlorid pro 100 mg Membran gebracht. Diese Lösung wird bei 0°C während 30 Minuten durch die Zugabe von 1 N-Natriumhydroxydlösung bei einem pH-Wert von 10 gehalten. Die Membran wird aus dieser Lösung entfernt, mit Eiswasser gewaschen und in eine gerührte 10%ige Lösung von Polyäthylenimin Molekulargewicht 40'000) gebracht und dort während 5 Minuten bei Raumtemperatur und einem pH-Wert von 10 gehalten. Die Membran wird aus dieser Lösung entfernt und mit einer Lösung in Kontakt gebracht, welche 4 % des Farbstoffes der Formel

(5)

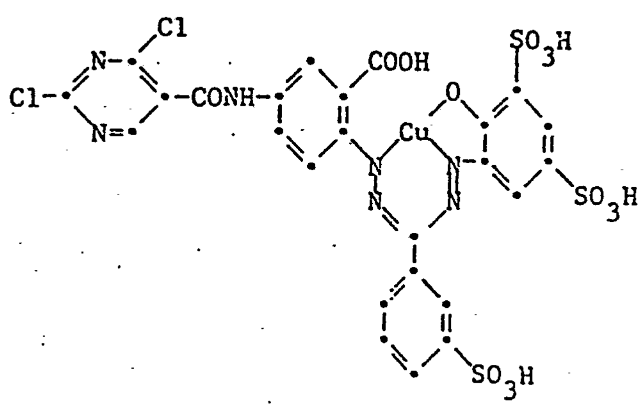

und 10% Natriumchlorid enthält und während 15 Minuten bei Raumtemperatur in dieser Lösung gehalten. Hierauf bringt man die Membran in eine 5%ige Lösung von Natriumcarbonat und hält sie dort während 30 Minuten bei Raumtemperatur. Nach dieser Behandlung wird der Durchfluss und das Rückhaltevermögen der Membran für verschiedene Farbstoffe, Salze und Komplexe gemessen.

Die Herstellung weiterer geeigneter Membranen ist in den übrigen Beispielen der deutschen Offenlegungsschrift 30 35 134 beschrieben.

C. Nach Beispiel 1 der EP-A- 26 399:

Eine Celluloseacetat-Ausgangsmembran (Acetylgehalt 38,9 %) mit den folgenden Spezifikationen.:

Molekulargewicht von Dextrin, welches zu 95 % zurückgehalten wird: 2000

Maximaler Arbeitsdruck: 13 bar

Porendurchmesser: 1,3 nm

Rückhaltevermögen für eine 2%ige Lösung des Farbstoffs der Formel (4): 82 %

NaCl : 4,5 %

$Na_2SO_4$ : 15 %

Durchfluss einer 2%igen Lösung des Farbstoffes der Formel (4): 55 L/m -h

wird folgendermassen modifiziert: Die Membran wird während 15 Minuten mit einer 5%igen Lösung von Natriumbicarbonat und hierauf während 2 Stunden mit einer 2%igen Petrolätherlösung (Siedepunkt 80-100°C) von Cyanurchlorid behandelt. Nachdem die so behandelte Membran in kaltem Wasser gespült worden ist, wird sie in eine 20%ige, mit Natriumhydroxid auf einen pH-Wert von 9 eingestellte Polyäthyleniminlösung Molekulargewicht 189) gebracht und dort während 2 Stunden bei 40°C gehalten. Anschliessend wird die Membran während 2 Stunden mit Wasser gespült. Dann wird sie in eine Lösung getaucht, welche 5 % des Reaktivfarbstoffes der Formel (5), 10 % Natriumchlorid und genügend Natriumcarbonat, um den pH-Wert auf 10,5 zu bringen, enthält, und während 2 Stunden bei Raumtemperatur in dieser Lösung belassen. Die Membran

wird hierauf bezüglich ihres Rückhaltevermögens und der Durchflussgeschwindigkeit geprüft.

Die Herstellung weiterer geeigneter Membranen ist in den übrigen Beispielen der EP-A- 26 399 beschrieben.

**Beispiel 1**: Die aus der Synthese erhaltene Rohlosung von

ZnPc($SO_3$Na)ca 4 (ZnPc = Zinkphthalocyaninringsystem), dre einen Fest stoffgehalt von etwa 13 % aufweist, wird in einer Pilot-Anlage für Umkehrosmose durch eine modifizierte Celluloseacetatmembran (erhalten z.B. gemäss vorstehender Membran-Herstellungsvorschrift A oder C) mit einer Membranfläche von $0{,}25^2$ m unter Anwendung von 25 bar Ueberdruck geführt und so während 6 Stunden aufkonzentriert, wobei Wasser in der Menge des ünfangsvolumens zugegeben wird. Es wird eine konzentrierte Photoaktivatorlösung erhalten, die neben Wasser

24,6 % $ZnPc(SO_3Na)_{ca\,4}$,
< 0,1 % NaCl
0,3 % $Na_2SO_4$ und
0,4 % organische Nebenprodukte

enthält. Die nach dem erfindungsgemässen Verfahren erhaltene Photoaktivatorlösung ist also praktisch frei von störenden Verunreinigungen.

Die erhaltene Lösung (Flüssigformulierung) ist ausgezeichnet lagerstabil und geliert auch bei langem Stehenlassen nicht.

Es kann auch eine Membran gemäss obiger Herstellungsvorschrift B oder eine beliebige andere in der Beschreibung definierte Membran eingesetzt werden.

**Beispiel 2**: In analoger Weise, wie in Beispiel 1 beschrieben, wird

eine aus der Synthese erhaltene Rohlösung von $AlPcCl(SO_3Na)_{3\text{-}4}$ (AlPc = Aluminiumphthalocyaninringsystem) mittels Umkehrosmose an einer modifizierten Membran gereinigt und aufkonzentriert. Man erhält eine konzentrierte, nicht gelierende, ausgezeichnet lagerstabile Formulierung von $AlPcCl(SO_3Na)_{3\text{-}4}$ mit ähnlichen Mengen an Nebenprodukten wie in Beispiel 1 angegeben.

Die nach dem erfindungsgemässen Verfahren erhaltenen Flüssigformulierungen können in der üblichen Weise weiterverarbeitet werden. Beispielsweise können sie in entsprechender Menge, gegebenenfills nach Verdünnen mit Wasser, dem Slurry eines Waschpulvers oder flüssigen Waschmittelzusammensetzungen zugegeben werden.

## Patentansprüche

1. Verfahren zur Verhinderung des Gelierens von konzentrierten wässrigen Photoaktivatorlösungen enthaltend sulfonierte Zinkoder/und Aluminiumphthalocyanine, dadurch gekennzeichnet, dass man zur Herstellung von weniger als 1 Gew.-% NaCl und $Na_2SO_4$ enthaltenden konzentrierten Lösungen eine die genannten Photoaktivatoren enthaltende Rohlösung über eine halbdurchlässige, asymmetrische, einen Porendurchmesser von 1 bis 500 nm aufweisende Membran führt, die aus einem Celluloseacetat-Grundgerüst, das durch Umsetzung mit einer reaktive Gruppierungen aufweisenden ionischen Verbindung modifiziert ist, besteht, oder die aus einem Grundgerüst besteht, das Polyacrylnitril oder Copolymerisat aus Acrylnitril und anderen äthylenisch ungesättigten Monomeren enthält, welches durch Umsetzung mit Hydroxylamin und anschliessender Umsetzung mit einer polyfunktionellen monomeren Verbindung, einem polyfunktionellen Polymer und einer reaktive Gruppierungen aufweisenden ionischen Verbindung modifiziert ist.

2. Verfahren nach Amspruch 1, dadurch gekennzeichnet, dass die Membran aus einem Celluloseacetat-Grundgerüst besteht, das durch Umsetzung mit einer polyfunktionellen monomeren Verbindung einem polyfunktionellen Polymer und einer reaktive Gruppierungen aufweisenden ionischen Verbindung modifiziert ist.

3. Verfahren nach Anspruch 1 oder 2, dadurch gekennzeichnet, dass das polyfunktionelle Polymer im Membran-Grundgerüst aliphatische oder aromatische Aninogruppen, Hydroxyl-, Thiol-, Isocyanat- und/oder Isothiocyanatgruppen aufweist.

4. Verfahren nach Anspruch 3, dadurch gekennzeichnet, dass das polyfunktionelle Polymer Polyäthylenimin, Polyvinylalkohol, ein Cellulosederivat, Polyvinylamin oder Polyvinylanilin ist.

5. Verfahren nach Anspruch 1 oder 2, dadurch gekennzeichnet, dass die Membran als ionische Gruppen sulfonsäure-, Carbonsäure- oder Ammoniumgruppen enthält.

6. Verfahren nach Anspruch 1, dadurch gekennzeichnet, dass die Membran als reaktive Gruppierungen aufweisende ionische Verbindung Reste eines wasserlöslichen Reaktivfarbstoffes enthält.

7. Verfahren nach Anspruch 1, dadurch gekennzeichnet, dass der Anteil der Acrylnitrileinheiten im

Grundgerüst der Membran mindestens 5 % und vorzugsweise mindestens 20 % beträgt.

8. Verfahren nach Anspruch 7, dadurch gekennzeichnet, dass das Grundgerüst der Membran Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymere auf Acrylnitrilbasis enthält.

9. Verfahren nach Anspruch 1, dadurch gekennzeichnet, dass man als sulfoniertes Zink- oder Aluminiumphthalocyanin ein solches der Formel

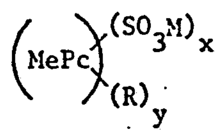
,

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, oder Mischungen von solchen Phthalocyaninen, einsetzt.

10. Verfahren nach Anspruch 9, dadurch gekennzeichnet, dass man als Phthalocyanin ein solches der Formel

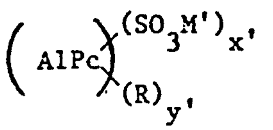

einsetzt, worin AlPc das Aluminiumphthalocyaninringsystem, M' Wasserstoff, Natrium oder Kalium, x' eine beliebige Zahl von 2 bis 4, R Fluor, Chlor, Brom oder Jod und y' eine beliebige Zahl von 0 bis 1,5 bedeuten.

11. Verfahren nach Anspruch 9, dadurch gekennzeichnet, dass man als Phthalocyanin ein solches der Formel

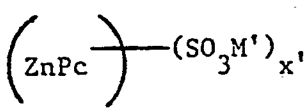

einsetzt worin ZnPc das Zinkphthalocyaninringsystem, M' Wasserstoff, Natrium oder Kalium und x' eine beliebige Zahl von 2 bis 4 bedeuten.

12. Nicht gelierende, konzentrierte, lagerstabile wässrige, gemäss Anspruch 1 erhaltene Photoaktivatorlösung, dadurch gekennzeichnet, dass sie 5 bis 50 Gew.-% eines oder mehrerer sulfonierter Aluminiumoder/und Zink-Phthalocyanine, insbesondere der Formel

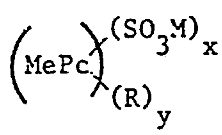
,

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, 0,05 bis 1 Gew.-% Neutralsalze, insbesondere NaCl und $Na_2SO_4$, und 0,05 bis 2 Gew.-% organische Nebenprodukte enthält.

13. Lösung nach Anspruch 12, dadurch gekennzeichnet, dass sie 10 bis 35 Gew.% eines Phthalocyanin-Photoaktivators der in Anspruch 12 angegebenen Formel, 0,01 bis 0,2 Gew.% NaCl, 0,1 bis 0,8 Gew.% $Na_2SO_4$ und 0,1 bis 1 Gew.% organische Nebenprodukte enthält.

14. Lösung nach Anspruch 12, dadurch gekennzeichnet, dass sie als Phthalocyanin ein solches der Formel

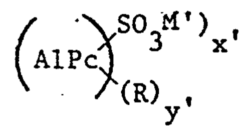

enthält, worin AlPc das Aluminiumphthalocyaninringsystem, M' Wasserstoff, Natrium oder Kalium, x' eine beliebige Zahl von 2 bis 4, R Fluor, Chlor, Brom oder Jod und y' eine beliebige Zahl von 0 bis 1,5 bedeuten.

15. Lösung nach Anspruch 12, dadurch gekennzeichnet, dass sie als Phthalocyanin ein solches der Formel
$(ZnPc\text{-})\text{-}(\text{-}SO_3M')_{x'}$
enthält, worin ZnPc das Zinkphthalocyaninringsystem, M' Wasserstoff, Natrium oder Kalium und x' eine beliebige Zahl von 2 bis 4 bedeuten.

**Claims**

1. A process for preventing the gelation of concentrated aqueous photoactivator solutions containing sulfonated zinc and/or aluminium phthalocyaninas, Which process comprises, in order to prepare concentrated solutions containing less than 1 % by weight of NaCl and $Na_2SO_4$, passing a crude meable asymmetrical membrane having a pore diameter of 0.1 to and consisting of a celluilose acetate basic structure which is modified by reaction with an ionic compound which contains contains polyacrylonitrile or a copolymer of acrylonitrile and other ethylenically unsaturated monomers, and which is modified by reaction with hydroxylamine and subsequent reaction with a polyfunctional monomer,a polyfunctional polymer and an ionic compound which contains reactive groups.

2. A process according to claim 1, wherein the membrane consists of a cellulose acetate basic structure which is modified by reaction with a polyfunctional monomer, a polyfunctional polymer and an ionic compound which contains reactive groups.

3. A process according to either of claims 1 or 2, wherein the polyfunctional polymer in the membrane basic structure contains aliphatic or aromatic amino groups, hydroxyl, thiol, isocyanate and/or isothiocyanate groups.

4. A process according to claim 3, wherein the polyfunctional polymer ia polyethyleneimlne, polyvinyl alcohol a cellulose derivative, polyvinylamine or polyvinylaniline.

5. A process according to either of claims 1 or 2, wherein the menbrane contains sulfonic acid, carboxylic acid or ammonium groups as ionic groups.

6. A process according to claim 1, wherein the membrane contains radicals of a water-soluble reactive dye as ionic compound which contains reactive groups.

7. A process according to claim 1, wherein the basic structure of the membrane contains at least 5%, and preferably at least 20%, of acrylonitrile units.

8. A process according to claim 7, wherein the basic structure of the membrane contains copolymers of acrylonitrile and vinyl acetate, vinyl ethers, vinyl pyridine, vinyl chloride, styrene, butadiene, acrylic or methacrylic acid, maleic anhydride, 2-aminomethylmethacrylate or allyl compounds or terpolymers or tetrapolymers of acrylonitrile.

9. A process according to claim 1, which comprises the use of a sulfonated zinc or aluminium phthalocyanine of the formula

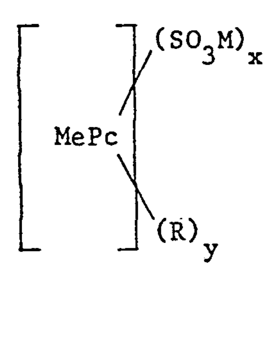

wherein MePc is the zinc or aluminium phthalocyanine ring system, M is hydrogen, an alkali metal ion or an ammonium ion, R is fluorine, chlorine, bromine or iodine, x is any value from 1.3 to 4 and y is any value from 0 to 4, with the proviso that substituents R in the molecule may be identical or different, or a mixture thereof.

10. A process according to claim 9, which comprises the use of a phthalocyanine of the formula

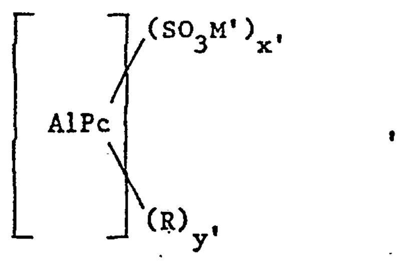

wherein AlPc is the aluminium phthalocyanine ring system, M' is hydrogen, sodium or potassium x' is any value from 2 to 4, R is fluorine, chlorine, bromine or iodine and y' is any value from 0 to 1.5.

11. A process according to claim 9, which comprises the use of a phthalocyanine of the formula

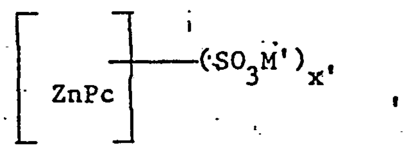

wherein ZnPc is the zinc phthalocyanine ring system, M' is hydrogen, sodium or potassium, and x' is any value from 2 to 4.

12. A non-gelling, concentrated, storage-stable aqueous photoactivator solution obtained according to the process as claimed in claim 1, which solution contains 5 to 50% by weight of one or more sulfonated aluminium and/or zinc phthalocyanines, in particular of the formula

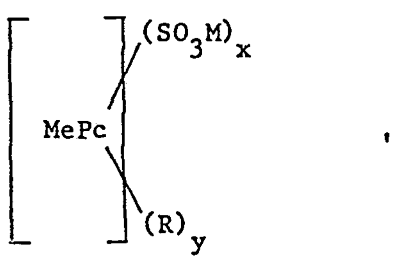

wherein MePc is the zinc or aluminium phthalocyanine ring system, M is hydrogen, an alkali metal ion or an ammonium ion, R is fluorine, chlorine, bromine or iodine, x is any value from 1.3 to 4 and y is any value from 0 to 4, with the proviso that substituents R in the molecule may be identical or different 0.05 to 1 % by weight of neutral salts, in particular NaCl and $Na_2SO_4$, and 0.05 to 2 % by weight of organic by-products.

13. A solution according to claim 12, which contains 10 to 35% by weight of a phthalocyanine photoactivator of the formula as indicated in claim 12, 0.01 to 0.2 % by weight of NaCl, 0.1 to 0.8 % by weight of $Na_2SO_4$ and 0.1 to 1 % by weight of organic by-products.

14. A solution according to claim 12, which contains a phthalocyanine of the formula

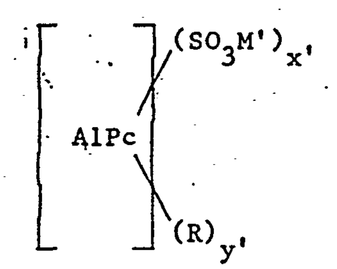

,

wherein AlPc is the aluminium phthalocyanine ring system, M' is hydrogen, sodium or potassium, x' i-s any value from 2 to 4 , R is fluorine, chlorine, bromine or iodine, and y' is any value from 0 to 1.5.

15. A solution according to claim 12, which contains a phthalocyanine of the formula

$(ZnPc)-(SO_3M')_{x'}$

wherein ZnPc is the zinc phthalocyanine ring system, M' is hydrogen, sodium or potassium, and x' is any value from 2 to 4.

**Revendications**

1. Procédé pour empêcher la gélification de solutions aqueuses concentrées de photo-activateurs, contenant des zinco- et/ou aluminophthalocyanines sulfonées, caractérisé par le fait que, pour la préparation de solutions concentrées contenant moins de 1% en poids de NaCl et de $Na_2SO_4$, on fait passer une solution brute contenant les photoactivateurs cités, sur une membrane semi-perméable, asymétrique, présentant un diamètre de pores de 0,1 à 50 nm, qui est constituée d'un réseau de base d'acétate de cellulose qui est modifié par réaction avec un composé ionique comportant des groupements réactifs, ou qui est constituée d'un réseau de base qui contient du polyacrylonitrile ou un copolymère d'acrylonitrile et d'autres monomères à insaturation éthylénique, lequel réseau est modifié par réaction avec de l'hydroxylamine et reaction subséquente avec un composé monomère polyfonctionnel, un polymère polyfonctionnel et un composé ionique comportant des groupements réactifs.

2. Procédé selon la revendication 1, caractérisé par le fait que la membrane est constituée d'un réseau de base d'acétate de cellulose qui est modifié par réaction avec un composé monomère polyfonctionnel, un polymère polyfonctionnel et un composé ionique comportant des groupements réactifs.

3. Procédé selon la revendication 1 ou 2, caractérisé par le fait que le polymère polyfonctionnel présent dans le réseau de base de la membrane comporte des groupes amino, hydroxyle, thiol, isocyanate et/ou isothiocyanate; aliphatiques ou aromatiques.

4. Procédé selon la revendication 3, caractérisé par le fait que le polymère polyfonctionnel est la polyéthylène-imine, le poly(alcool vinylique), un dérivé de la cellulose, la polyvinylamine ou la polyvinylaniline.

5. Procédé selon la revendication 1 ou 2, caractérisé par le fait que la membrane contient en tant que groupes ioniques des groupes sulfo, carboxyle ou ammonium.

6. Procédé selon la revendication 1, caractérisé par le fait que la membrane contient, en tant que composé ionique comportant des groupements-réactifs, des restes d'un colorant réactif soluble dans l'eau.

7. Procédé selon la revendication 1, caractérisé par le fait que là proportion des motifs acrylonitrile dans le réseau de base de la membrane s'éléve au moins à 5% et, de préférence, au moins à 20%.

8. Procédé selon la revendication 7, caractérisé par le fait que le réseau de base de la membrane contient des copolymères d'acrylonitrile et d'acétate de vinyle, d'éthers vinyliques, de vinylpyridine, de chlorure de vinyle, de styrène, de butadiène, d'acide (méth)acrylique, d'anhydride maléique, de 2-aminométhyl-acrylate de méthyle ou de composés allyle, ou bien des ter- ou tétrapolyméres à base d'acrylonitrile.

9. Procédé selon la revendication 1, caractérisé par le fait que l'on utilise en tant que zinco- ou alumino-phthalocyanine une telle phthalocyanine de formule

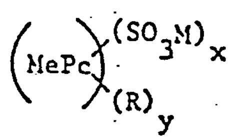

,

dans laquelle MePc représente le système cyclique zinco- ou aluminophthalocyanine; M représente un atome d'hydrogène, un ion alcalin ou ammonium; R représente le fluor, le chlore, le brome ou l'iode; x est un

nombre quelconque allant de 1,3 à 4; et y est un nombre quelconque allant de 0 à 4; les substituants R présents dans la molécule pouvant être identiques ou différents; ou des mélanges de telles phthalocyanines.

10. Procédé selon la revendication 9, caractérisé par le fait que l'on utilise en tant que phthalocyanine une phthalocyanine de formule

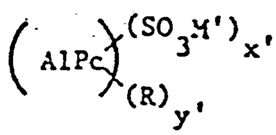

dans laquelle AlPc représente le système cyclique alumino-phthalocyanine; M' représente un atome d'hydrogène, de sodium ou de potassium; x' est un nombre quelconque allant de 2 à 4; R représente le fluor, le chlore, le brome ou l'iode; et y' est un nombre quelconque allant de 0 à 1,5.

11. Procédé selon la revendication 9, caractérisé par le fait que l'on utilise en tant que phthalocyanine une phthalocyanine de formule

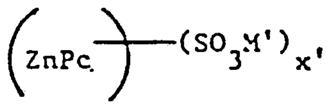

dans laquelle ZnPc représente le système cyclique zinco-phthalocyanine; M' représente un atome d'hydrogène, de sodium ou de potassium; et x' est un nombre quelconque allant de 2 à 4.

12. Solution aqueuse de photo-activateur, ne se gélifiant pas, concentrée, stable au stockage, obtenue selon la revendication 1, caractérisée par le fait qu'elle contient de 5 à 50% en poids d'une ou plusieurs alumino- et/ou zinco-phthalocyanines sulfonées, en particulier de formule

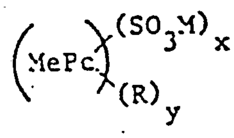,

dans laquelle MePc représente le systéme cyclique zinco- ou aluminophthalocyanine; M représente un atome d'hydrogène, un ion alcalin ou ammonium; R représente le fluor, le chlore, le brome ou l'iode; x est un nombre quelconque allant de 1,3 à 4; et y est un nombre quelconque allant de 0 à 4; les substituants R présents dans la molécule pouvant être identiques ou différents; 0,05 à 1% en poids de sels neutres, en particulier NaCl et $Na_2SO_4$, et 0,05 à 2% en poids de sous-produits organiques.

13. Solution selon la revendication 12, caractérisée par le fait qu'elle contient de 10 à 35% en poids d'un photo-activateur de type phthalocyanine de formule indiquée dans la revendication 12, de 0,01 à 0,2% en poids de NaCl, de 0,1 à 0,8% en poids de $Na_2SO_4$ et 0,1 à 1% en poids de sous-produits organiques.

14. Solution selon la revendication 12, caractérisée par le fait qu'elle contient en tant que phthalocyanine une phthalocyanine de formule

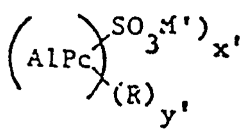

dans laquelle AlPc représente le système cyclique alumino-phthalocyanine; M' représente un atome d'hydrogène, de sodium ou de potassium; x' est un nombre quelconque allant de 2 à 4; R représente le fluor, le chlore, le brome ou l'iode; et y' est un nombre quelconque allant de 0 à 1,5.

15. Solution selon la revendication 12, caractérisée par le fait qu'elle contient en tant que phthalocyanine une phthalocyanine de formule

$$(ZnPc)-(SO_3M')_{x'}$$

dans laquelle ZnPc représente le système cyclique zinco-phtalocyanine; M' représente un atome d'hydrogène, de sodium ou de potassium; et x' est un nombre quelconque allant de 2 à 4.